Europäisches Patentamt

European Patent Office

Office européen des brevets

(11) Publication number: **0 190 441**
**B1**

# EUROPEAN PATENT SPECIFICATION

(45) Date of publication of patent specification: **08.02.89**

(51) Int. Cl.⁴: **F 16 C 35/08**

(21) Application number: **85115724.8**

(22) Date of filing: **10.12.85**

(54) A device for fixing a journal.

(30) Priority: **25.01.85 SE 8500356**

(43) Date of publication of application:
**13.08.86 Bulletin 86/33**

(45) Publication of the grant of the patent:
**08.02.89 Bulletin 89/06**

(84) Designated Contracting States:
**DE FR GB IT**

(56) References cited:
**DE-C- 332 612**
**FR-A- 485 006**
**FR-A-1 398 863**
**FR-A-1 423 293**
**US-A-4 308 605**

(73) Proprietor: **SKF Nova AB**
**S-415 50 Göteborg (SE)**

(72) Inventor: **Lundgren, Bengt**
**Strömstadsvägen 8 B**
**S-451 50 Uddevalla (SE)**

(74) Representative: **Kristiansen, Alf P.**
**Aktiebolaget SKF Patent Department**
**S-415 50 Göteborg (SE)**

Courier Press, Leamington Spa, England.

## Description

The invention relates to a device of the kind stated in the introductory clause of claim 1.

In e.g. a roller conveyor a great number of journals, on which rollers are mounted in bearings, are usually mounted in the frame of the conveyor. A roller is usually mounted by placing the roller between two frame beams and inserting a shaft through a bore in one beam, through a central bore in the roller and through a bore in the opposite beam, whereupon the shaft is secured in the frame by e.g. placing a locking peg in a diametrical bore at the shaft end in connection to the frame beam.

This mounting method is, however, not applicable if the shaft is integral with the roller, e.g. if the shaft comprises raceways for rolling bodies of rolling bearings which are arranged in the roller and in which the roller is mounted on the shaft.

One existing method of mounting a roller with an integral shaft in a frame is to fix the shaft in the frame with a screw which is inserted through a hole in the frame beam and is screwed into a threaded bore in the shaft end. This mounting method makes the load carrying capacity of the roller less than the load carrying capacity of the shaft itself, since the entire load is taken up by the screw. The screw is considerably weaker than the shaft, since its diameter has to be less than the diameter of the shaft in order to be insertable into a threaded bore in the shaft end.

In rollers not having any shaft it is known to rotatably mount the roller in a support by using cooperating convex and concave friction bearing surfaces. Devices of this type are disclosed in for instance FR—A—485006 and US—A—4308605. However, such prior art devices relate to bearings for a roller rather than to attachment of a shaft to a support.

The object of the invention is to provide a device for fixing a journal in e.g. a frame, whereby the journal can be integral with a roller which is rotatably mounted on the journal, and the journal can be heavily loaded without the risk of overloading the fixing member.

This is achieved according to the invention by giving the device the characterizing features stated in claim 1.

Such a device permits a journal to be easily and quickly mounted irrespective of presence of any members, such as an integral roller, mounted on the journal, and the journal can be firmly fixed in position.

The following is a detailed description of the invention with reference to the accompanying drawing in which Figures 1 and 2 show conventional fixing devices, and Figures 3—7 show, partly in section, devices according to various embodiments of the invention.

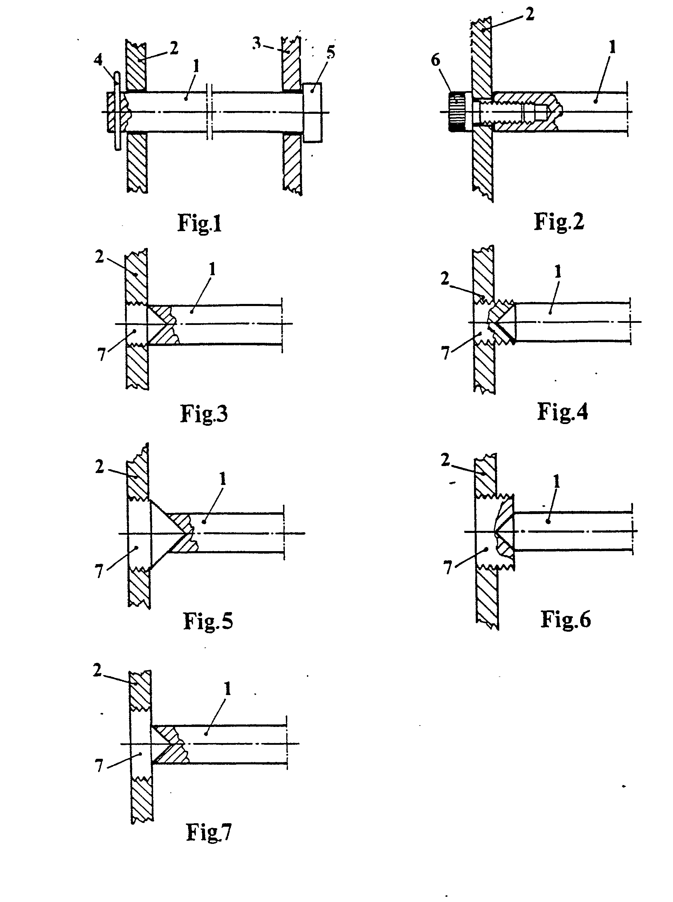

The journal 1 shown in Figure 1 is, as described above, supported by two frame beams 2, 3 by being inserted in holes in the beams and secured by a locking peg 4 at one end. The other end of the journal may be provided with a flange 5 or have a hole for another peg corresponding to peg 4. The journal can support a roller or the like, not shown, whereby the journal passes through a central bore in the roller and through bores in inner rings of bearings arranged in the bore of the roller, which bearings thus have to allow free passage of the shaft.

Figure 2 shows a fixing device for one end of a journal 1 (the device for fixing the other end of the journal is suitably of the same kind) which can not be inserted through the element 2 supporting the journal, e.g. because the journal is integral with a roller which is rotatably mounted on the journal and which has too great a radial extension to pass through a hole in the element 2 or the corresponding element at the opposite end of the journal. With the device shown, the journal is fixed by a fixing member in the shape of a screw 6 which passes a hole in the element 2 and is screwed into a threaded bore in the end of the journal.

The journal may thus be mounted by being placed in position in a direction perpendicular to its longitudinal extension, whereby insertion in a position between e.g. two frame beams can be carried out irrespective of whether the beams are provided with holes permitting the journal to pass axially through the holes. In this arrangement the entire load on the journal 1 is taken up by the screw 6, which is usually weaker than the journal, whereby the load carrying capacity of the device is comparatively limited.

The invention gives the possibility to mount a journal in the manner described in connection to Figure 2, although the load carrying capacity of the mounted journal is the same as for a journal mounted according to Figure 1. Figures 3—7 show some possible embodiments of the invention, partly in section. As in Figure 2, only the fixing at one end of the shaft is shown, for the sake of simplicity. The opposite end is suitably fixed in a corresponding manner in the respective embodiments.

Figure 3 shows that the end of a journal 1 and the end of a fixing member 7 arranged in an element 2 which supports the journal are shaped as complementary cones. The sectioned surface shown in the figure is situated in the plane of the cone axes. The base diameter of the cone of the journal is equal to the diameter of the journal, and the cone of the fixing member is at least as large as the cone of the journal. Thereby the cones are contacting each other over a surface, the projection of which in a plane perpendicular to the axis of journal 1 is equal to the cross section area of the journal. If the cone angle is 90° it can be calculated that the strength of the joint between the journal 1, and the fixing member 7 is about equal to the shear strength of the journal 1 proper.

The cone of the fixing member 7 is convex in Figure 3, whereas the cone of the journal end is concave. Figure 4 shows that the situation can also be reversed, i.e. the cone of the fixing member 7 is concave and the cone of the journal 1 is convex.

Figure 5 shows a fixing member, the cone of which is larger than the cone of the journal 1. This shows that the same fixing member can be used for different journal diameters up to the base diameter of the cone of the fixing member.

Figures 6 and 7 show that the fixing members, within the limits of the same external size, can be adapted for different journal diameters, whereby a standard design of the connection between the fixing member 7 and the element 2 supporting the journal can be used. The fixing member 7 suitably has a threaded external portion and is arranged in a corresponding threaded bore in the element 2. Thereby the axial pre-stress and position of the journal can be adjusted by the member 7.

The complementary cones need not be perfect geometrical cones. The surface outline in the axial section may, for example, be slightly curved. If the apex angle of the cones is less than 90° the joint will be stronger than if the angle is greater than 90°. The shape of the cones is preferably determined by practical considerations.

## Claims

1. A device for fixing a journal (1) in a supporting element (2) in which is provided a fixing member (7) which is movable against the journal end, the journal and the supporting element being non-rotatable in relation to each other, characterized in that the journal end and the end of the fixing member are formed as complementary cones, one of which being convex and the other concave, the base diameter of the cone of the journal being equal to the diameter of the journal and the cone of the fixing member being at least as large as the cone of the journal.

2. A device according to claim 1, characterized in that the fixing member (7) has a threaded external portion and is arranged in a corresponding threaded bore in the supporting element (2).

3. A device according to claim 2, characterized in that the diameter of the threaded external portion of the fixing member (7) is greater than the diameter of the journal.

## Patentansprüche

1. Vorrichtung zum Befestigen eines Bolzens (1) in einem Tragelement (2) mit darin vorgesehenem, zum Ende des Bolzens bewegbarem Befestigungsteil (7) wobei der Bolzen und das Tragelement (2) gegeneinander nicht drehbar sind, dadurch gekennzeichnet, daß das Ende des Bolzens und das Ende des Befestigungsteils als komplementäre Konen ausgebildet sind, wobei eine Konus konvex und der andere konkav ist, daß der Basisdurchmesser des Konus' des Bolzens dessen Durchmesser entspricht und der Konus des Befestigungsteiles mindestens so groß wie der Konus des Bolzens ist.

2. Vorrichtung nach Anspruch 1, dadurch gekennzeichnet, daß das Befestigungsteil (7) ein Außengewinde aufweist und in einer entsprechenden Gewindebohrung des Tragelementes (2) angeordnet ist.

3. Vorrichtung nach Anspruch 2, dadurch gekennzeichnet, daß der Durchmesser des Gewindes des Befestigungsteiles (7) größer als der Durchmesser des Bolzens ist.

## Revendications

1. Dispositif pour fixer un tourillon (1) dans un élément de support (2) dans lequel est prévu un organe de fixation (7) pouvant être déplacé contre l'extrémité du tourillon, le tourillon et l'élément de support n'étant pas mobiles en rotation l'un par rapport à l'autre caractérisé en ce que l'extrémité du tourillon et l'extrémité de l'organe de fixation ont la forme de cônes complémentaires, dont l'un est convexe et l'autre concave, le diamètre de la base du cône du tourillon étant égal au diamètre du tourillon et le cône de l'organe de fixation étant au moins aussi grand que le cône du tourillon.

2. Dispositif selon revendication 1 caractérisé en ce que l'organe de fixation (7) présente une partie extérieure filetée et est disposé dans un alésage fileté correspondant dans l'élément de support (2).

3. Dispositif selon revendication 2 caractérisé en ce que le diamètre de la partie extérieure filetée de l'organe de fixation (7) est plus grand que le diamètre du tourillon.

Fig.1

Fig.2

Fig.3

Fig.4

Fig.5

Fig.6

Fig.7